# EUROPEAN PATENT SPECIFICATION

(11) **EP 2 965 601 B1**
(45) Date of publication and mention of the grant of the patent: **02.08.2017**
(21) Application number: 15174464.6
(22) Date of filing: 30.06.2015
(51) Int. Cl.: A01B 49/02

(54) **DISC HARROW**
SCHEIBENEGGE
HERSE À DISQUE

(30) Priority: 09.07.2014 IT PD20140181
(43) Date of publication of application: 13.01.2016
(73) Proprietor: Mascar S.p.A., 36040 Grumolo delle Abbadesse (VI) (IT)
(72) Inventor: MASCHIO, Antonio, 36040 Grumolo delle Abbadesse (VI) (IT); MASCHIO, Sante, 36040 Grumolo delle Abbadesse (VI) (IT)
(74) Representative: Cantaluppi, Stefano

(56) References cited:
- EP-A1- 0 266 276
- EP-A1- 2 564 679
- EP-A2- 0 191 523
- WO-A2-2012/079567
- DE-A1- 2 601 234
- GB-A- 2 137 463

## Description

The invention concerns a disc harrow according to the preamble of the main claim. Such harrows are widely used in soil working, particularly for burying crop residues and preparing seed beds. With respect to other types of harrow, these have the advantage of working large surface areas in a short time thanks to the speed at which they can be towed. Paradoxically, and within certain limits, the faster the passage of the harrow, the better the result in terms of refinement of the soil.

In order to improve especially the preparation of the seed bed, disc harrows are provided with one or more rollers whose function is to superficially refine the soil. However, as the speed of passage is increased, there is also an increase in problems arising from the presence of the rollers, since above a certain speed of towing, these tend to become clogged and choked with soil, in such a way as to damage the worked surface by creating troughs, gutters and mounds of accumulated soil, and especially by requiring the stoppage of the machine and/or intervention by the operator, which at least partially negates the beneficial effects of the working speed.

An example of a double-row disc harrow is described in US 20130299204. This document focuses entirely on the form and arrangement of the rows of discs and gives no attention to the positioning or function of the rollers dedicated to the refinement of the working. Tests on similar devices have shown that the rollers thus arranged are subject to clogging problems as soon as above-medium speeds are reached. In addition, the rollers easily become clogged when used on wet, heavy soils.

Disc harrows provided with rear rollers are described in EP2564679 and WO2012/079567, while other types of harrows are described in GB2137463, DE2601234, EP191523 and EP266276. The first two documents describe harrows with rows of discs followed by idle rollers; the other documents describe harrows of a different type with rollers kinematically interconnected with each other. None of them envisages the combination of discs and rollers characterising the present invention, which in practical tests has allowed the achievement of significantly higher working harrowing speeds than the known combinations.

The technical problem addressed by the present invention is that of providing a disc harrow specially designed to allow high-speed harrowing without any problems of roller clogging.

In the context of this problem, one aim of the invention is to provide a disc harrow capable of improved refinement of the soil.

Another aim of the invention is to provide a disc harrow suitable for high-speed working operations.

This problem is solved and these aims achieved by a disc harrow created in accordance with the claims that follow.

The characteristics and advantages of the present invention will be best shown by the detailed description of a preferred example of its implementation, illustrated for the purposes of non-limitative indication with reference to the attached drawings, in which:

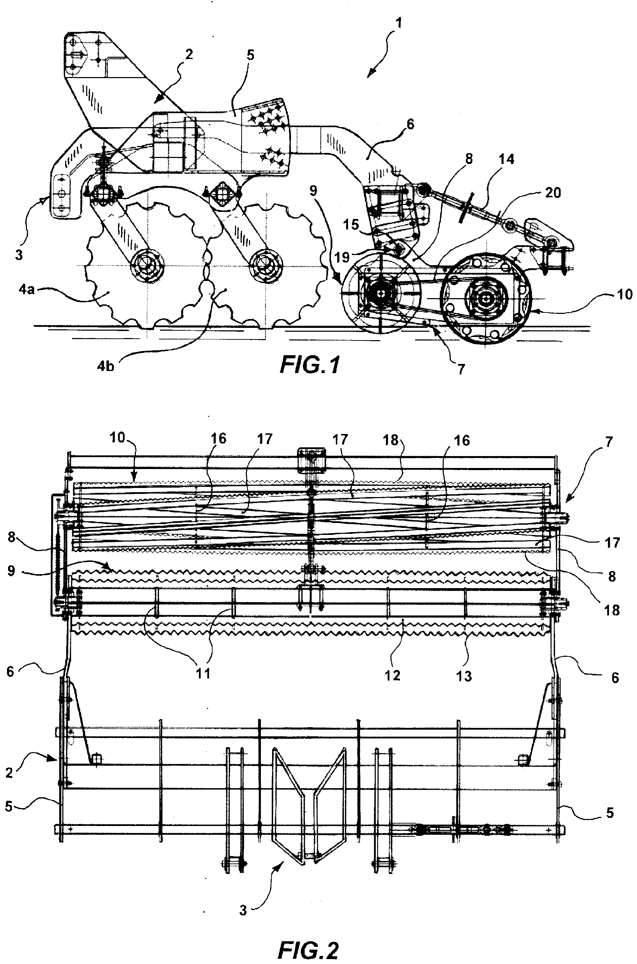

- Figure 1 is a schematic view in lateral elevation of a harrow created in accordance with the present invention;
- Figure 2 is a plan view of the harrow of Figure 1, with the rows of discs omitted for the sake of simplicity.

In the drawings, 1 indicates a disc harrow comprising a load-bearing frame 2 generally provided with a three-point attachment, if the harrow is the carried type, or a drawbar if the harrow is towed. In the illustrated example, reference is made to a carried harrow provided with a three-point attachment 3, but the present invention lends itself in an entirely similar manner to the creation of towed harrows.

On the load-bearing frame 2 are mounted two or more rows of discs 4a,b of a type that is traditional per se. The discs of the rows 4a,b are mounted idle on disc-bearing shafts 4, which in turn are mounted on the frame 2 by means of clamps.

The frame 2 comprises opposite sides 5 to which are fitted, in respective adjustable angular positions, tails 6 which in turn carry the sides 8 of an auxiliary frame 7.

The auxiliary frame 7 is hinged to the tails 6 by hinge pins 19 in such a way that it can oscillate around a hinge axis 15. The relative position is adjusted by means of a jack 14.

The auxiliary frame 7 carries a pair of rollers 9, 10, respectively of the comb and cage type.

Preferably, the hinge axis 15 between the load-bearing frame 2 and the auxiliary frame 7 is closer to the axis of the comb roller 9 than the axis of the cage roller 10.

The comb roller 9 is further advanced towards the discs 4a,b than the cage roller 10 and has a diameter smaller than the latter. It comprises a series of flanges 11 that support flat bars or flange plates 12 arranged parallel to the axis of the roller and having, on the outermost diameter, a toothed profile 13. The flange plates 12 are arranged radially, but it is envisaged that they may have a different arrangement, either in the angles with respect to the radial arrangement or in any helical arrangement with respect to the axis of the comb roller 9.

The cage roller 10 sits further back with respect to the comb roller 9 and similarly comprises a series of flanges 16 carrying tubular bars 17 to whose outermost profile (with reference to the centre of the roller) are welded flange bars 18, which also have a toothed profile. The tubular bars 17 are distributed helically with respect to the axis of the roller and, thanks to the flange plates 18, generate a substantial pulling torque which is exerted by the roller 10 due to the effect of its rolling on the ground, as will be explained below.

It is envisaged that further rollers may be added to the pair of rollers just described, although it has been found that the two rollers 9 and 10 allow the desired result to be achieved. Preferably, the diameter of the comb roller 9 is smaller than the diameter of the cage roller 10.

The two rollers are kinematically interconnected with each other by means of a chain transmission 20 so that the roller 9 rotates jointly with the roller 10. The chain transmission may be replaced by other equivalent transmission systems, for example using gears or toothed belts. The roller 10 drives the roller 9 by rotating it at a predetermined transmission ratio and generating a pulling torque which, as mentioned, is improved by the provision of the flange plates 18 on the bars 17.

Preferably, the transmission ratio between the two rollers is not unity and is at least such that the tangential velocity of the comb roller 9 is greater than or at least equal to the tangential velocity of the cage roller 10. In practice and preferably, the comb roller 9 is made to rotate at a velocity greater than that of a simple rolling motion. This results in a further improvement in the tendency of the pair of rollers not to choke up, thus allowing a higher working speed of the harrow of the present invention.

The invention thus solves the described problem and simultaneously provides numerous advantages, including an improved refinement of the seed bed worked in this way, increased hourly production even on difficult ground such as wet and heavy soils, and a low power requirement for the tractor.

## Claims

1. A disc harrow comprising at least one row of discs (4a,b) and at least one pair of rollers (9,10) lying behind said at least one row of discs (4a,b), **characterised in that** the at least one pair of rollers (9,10) comprises at least one cage roller (10) and at least one comb roller (9) which are kinematically interconnected with each other for joint rotation with a predetermined transmission ratio, and **in that** the comb roller (9) is more advanced towards the discs (4a,b) with respect to the cage roller (10) and has a smaller diameter than the latter.

2. A disc harrow according to claim 1, wherein the cage roller (10) is of the type having helically arranged bars and has, on each bar (17), at least one toothed profile extending towards the exterior of the cage.

3. A disc harrow according to claims 1 or 2, wherein the transmission ratio between said rollers (9,10) is not unity.

4. A disc harrow according to claim 3, wherein the transmission ratio between said rollers (9,10) is such that the tangential velocity of the comb roller (9) is greater than the tangential velocity of the cage roller (10).

5. A disc harrow according to any of the preceding claims, wherein the comb roller (9) is of the type having radial toothed bars (12) essentially parallel to the axis of the roller.

6. A disc harrow according to any of the preceding claims, wherein said rollers (9,10) are kinematically connected by means of a chain transmission (20).

7. A disc harrow according to any of claims 1 to 5, wherein said rollers (9,10) are kinematically connected by means of a belt or gear transmission.

8. A disc harrow according to any of the preceding claims and comprising at least one load-bearing frame (2) and at least two rows of discs (4a,b) mounted on said load-bearing frame (2).

9. A disc harrow according to any of the preceding claims, wherein said at least one pair of rollers (9,10) is supported on an auxiliary frame (7) hinged to the load-bearing frame (2) of the harrow, behind the rows of discs (4a,b), and wherein the inclination of the auxiliary frame (7) about the hinge axis (15) with respect to the load-bearing frame (2) is adjustable.

10. A disc harrow according to claim 9, wherein the hinge axis (15) between the load-bearing frame (2) and the auxiliary frame (7) is closer to the axis of the comb roller (9) than the axis of the cage roller (10).

## Patentansprüche

1. Scheibenegge, mindestens eine Reihe von Scheiben (4a, b) sowie mindestens ein Paar von Walzen (9, 10) umfassend, welches hinter der mindestens einen Reihe von Scheiben (4a, b) liegt, **dadurch gekennzeichnet, dass** das mindestens eine Paar von Walzen (9, 10) mindestens eine Stegwälzegge (10) sowie mindestens eine Kammwalze (9) umfasst, die zum Zwecke der gemeinsamen Drehung mit einem zuvor festgelegten Übersetzungsverhältnis kinematisch miteinander verbunden sind, und dass die Kammwalze (9) in Bezug auf die Stegwälzegge (10) mehr zu den Scheiben (4a, b) hin vorgerückt ist und einen geringeren Durchmesser als die Stegwälzegge (10) aufweist.

2. Scheibenegge gemäß Anspruch 1, wobei die Stegwälzegge (10) von der Art ist, die spiralförmig angeordnete Stangen aufweist und auf jeder der Stangen (17) mindestens ein Zahnprofil hat, das sich zu der Außenseite des Käfigs hin erstreckt.

3. Scheibenegge gemäß Ansprüchen 1 oder 2, wobei das Übersetzungsverhältnis zwischen den Walzen (9, 10) nicht einheitlich ist.

4. Scheibenegge gemäß Anspruch 3, wobei das Übersetzungsverhältnis zwischen den Walzen (9, 10) so beschaffen ist, dass die Tangentialgeschwindigkeit der Kammwalze (9) größer als die Tangentialgeschwindigkeit der Stegwälzegge (10) ist.

5. Scheibenegge gemäß einem beliebigen der vorangehenden Ansprüche, wobei die Kammwalze (9) von der Art ist, die radiale Zahnstangen (12) aufweist, welche im Wesentlichen parallel zu der Achse der Walze verlaufen.

6. Scheibenegge gemäß einem beliebigen der vorangehenden Ansprüche, wobei die Walzen (9, 10) mittels Kettenübersetzung (20) kinematisch verbunden sind.

7. Scheibenegge gemäß einem beliebigen der Ansprüche 1 bis 5, wobei die Walzen (9, 10) mittels einer Riemenübertragung oder eines Zahnradgetriebes (20) kinematisch verbunden sind.

8. Scheibenegge gemäß einem beliebigen der vorangehenden Ansprüche und mindestens einen Tragrahmen (2) sowie mindestens zwei Reihen von Scheiben (4a, b) umfassend, die auf dem Tragrahmen (2) montiert sind.

9. Scheibenegge gemäß einem beliebigen der vorangehenden Ansprüche, wobei das mindestens eine Paar von Walzen (9, 10) auf einem Hilfsrahmen (7) gehalten ist, der hinter den Reihen von Scheiben (4a, b) zu dem Tragrahmen (2) der Egge gelenkartig gelagert ist, und wobei die Neigung des Hilfsrahmens (7) um die Scharnierachse (15) in Bezug auf den Tragrahmen (2) einstellbar ist.

10. Scheibenegge gemäß Anspruch 9, wobei sich die Scharnierachse (15) zwischen dem Tragrahmen (2) und dem Hilfsrahmen (7) näher an der Achse der Kammwalze (9) befindet als die Achse der Stegwälzegge (10).

## Revendications

1. Herse à disques comprenant au moins une rangée de disques (4a, b) et au moins une paire de rouleaux (9, 10) se trouvant à l'arrière de ladite au moins une rangée de disques (4a, b), **caractérisée en ce que** l'au moins une paire de rouleaux (9, 10) comprend au moins un rouleau à cage (10) et au moins un rouleau à peigne (9) qui sont interconnectés de manière cinétique l'un avec l'autre pour une rotation conjointe avec un rapport de transmission prédéterminé, et **en ce que** le rouleau à peigne (9) est plus avancé vers les disques (4a, b) par rapport au rouleau à cage (10) et a un diamètre plus petit que ce dernier.

2. Herse à disques selon la revendication 1, dans laquelle le rouleau à cage (10) est du type ayant des barres agencées de manière hélicoïdale et a, sur chaque barre (17), au moins un profil denté s'étendant vers l'extérieur de la cage.

3. Herse à disques selon les revendications 1 ou 2, dans laquelle le rapport de transmission entre lesdits rouleaux (9, 10) est différent de un.

4. Herse à disques selon la revendication 3, dans laquelle le rapport de transmission entre lesdits rouleaux (9, 10) est tel que la vitesse tangentielle du rouleau à peigne (9) est supérieure à la vitesse tangentielle du rouleau à cage (10).

5. Herse à disques selon l'une quelconque des revendications précédentes, dans laquelle le rouleau à peigne (9) est du type ayant des barres dentées radiales (12) essentiellement parallèles à l'axe du rouleau.

6. Herse à disques selon l'une quelconque des revendications précédentes, dans laquelle lesdits rouleaux (9, 10) sont reliés de manière cinétique au moyen d'une transmission par chaîne (20).

7. Herse à disques selon l'une quelconque des revendications 1 à 5, dans laquelle lesdits rouleaux (9, 10) sont connectés de manière cinétique au moyen d'une courroie ou d'une transmission par engrenages.

8. Herse à disques selon l'une quelconque des revendications précédentes et comprenant au moins un cadre de support de charge (2) et au moins deux rangées de disques (4a, b) montées sur ledit cadre de support de charge (2).

9. Herse à disques selon l'une quelconque des revendications précédentes, dans laquelle ladite au moins une paire de rouleaux (9, 10) est supportée sur un cadre auxiliaire (7) articulé sur le cadre de support de charge (2) de la herse, à l'arrière des rangées de disques (4a, b), et dans laquelle l'inclinaison du cadre auxiliaire (7) autour de l'axe d'articulation (15) par rapport au cadre de support de charge (2) est réglable.

10. Herse à disques selon la revendication 9, dans laquelle l'axe d'articulation (15) entre le cadre de support de charge (2) et le cadre auxiliaire (7) est plus proche de l'axe du rouleau à peigne (9) que de l'axe du rouleau à cage (10).
